# EUROPÄISCHE PATENTSCHRIFT

(11) **EP 3 708 978 B1**
(45) Veröffentlichungstag und Bekanntmachung des Hinweises auf die Patenterteilung: **03.05.2023**
(21) Anmeldenummer: 19161918.8
(22) Anmeldetag: 11.03.2019
(51) Int. Cl.: G01G 7/02

(54) **KOMPAKTES DIREKTMESSSYSTEM**
COMPACT DIRECT MEASUREMENT SYSTEM
SYSTÈME COMPACTE DE MESURE DIRECTE

(43) Veröffentlichungstag der Anmeldung: 16.09.2020
(73) Patentinhaber: Mettler-Toledo GmbH, 8606 Greifensee (CH)
(72) Erfinder: Reber, Daniel, 8322 Madetswil (CH); Birrer, Adrian, 8476 Unterstammheim (CH); Lang, Christoph, 8603 Schwerzenbach (CH)
(74) Vertreter: Mettler-Toledo

(56) Entgegenhaltungen:
- EP-A1- 1 925 919
- DE-A1- 3 136 049
- GB-A- 1 324 499
- GB-A- 1 571 785

## Beschreibung

### Technisches Gebiet

Die Erfindung bezieht sich auf ein elektromagnetisches Kraftkompensations-Direktmesssystem mit einem Lastaufnehmer und einer Kraftkompensationsvorrichtung, welche eine Spule und einen Permanentmagneten aufweist.

Ein elektromagnetisches Kraftkompensations-Direktmesssystem, im Folgenden auch als Direktmesssystem bezeichnet, zeichnet sich dadurch aus, dass der Lastaufnehmer über ein Kraftübertragungsgestänge direkt mit der Kraftkompensationsvorrichtung verbunden ist.

### Stand der Technik

Bei der elektromagnetischen Kraftkompensation wird die Kraft, die durch eine Last auf der Waagschale bzw. dem Lastaufnehmer verursacht wird, durch eine Kraftkompensationsvorrichtung, die aus mindestens einem Permanentmagneten und einer Spule besteht, kompensiert, wobei der durch die Spule fliessende Strom zur Erzeugung der Kompensationskraft gemessen wird. Dieser Messwert ist proportional zur aufgelegten Last. Dieser Messwert ist aber auch abhängig von der Position der Spule im Magnetfeld des Permanentmagneten und deshalb muss die Spule beim Erfassen des Messwertes stets dieselbe Position gegenüber dem Magneten aufweisen. Die Position der Spule nach Aufbringen der Last wird über einen Lagegeber ermittelt und der Strom an der Spule so lange erhöht, bis die von der Last verursachte Verschiebung der Spule gegenüber dem Permanentmagneten kompensiert ist. Dabei erfolgt die Messung des Spulenstroms, welcher ein Mass für das Gewicht der aufgelegten Last darstellt.

Ein Direktmesssystem wird in der CH 593 481 A5 offenbart. In dieser Patentschrift ist der Lastaufnehmer über ein Kraftübertragungsgestänge direkt mit der Kraftkompensationsvorrichtung gekoppelt. Am Kraftübertragungsgestänge ist die bewegliche Seite des Lagegebers angebracht, während die feststehende Seite des Lagegebers mit dem gehäusefesten Bereich der Wägezelle, beziehungsweise mit dem feststehenden Bereich der Kraftkompensationsvorrichtung, starr verbunden ist.

In der DE 31 36 049 A1 ist eine elektrische Waage offenbart, welche zur Abschirmung magnetischer Störeinflüsse ein zusätzlicher gehäusefester Permanentmagnet zwischen Permanentmagnetsystem und Gehäuse vorhanden ist, dessen magnetisches Feld das magnetische Feld im Luftspalt des Permanentmagnetsystems beeinflusst.

Dieses Direktmesssystem wird vorzugsweise im Niederlastbereich eingesetzt. Die Präzision der Messung hängt im Wesentlichen von der Auflösung und der Anordnung des Lagegebers im Direktmesssystem ab. Der Lastaufnehmer sowie die Spule der Kraftkompensationsvorrichtung müssen gegenüber dem feststehenden Bereich der Wägezelle präzise geführt werden. Dies geschieht über eine Parallelführung, deren beweglicher Parallelschenkel mit dem Kraftübertragungsgestänge verbunden ist und deren feststehender Parallelschenkel mit dem gehäusefesten Bereich der Wägezelle starr verbunden ist. Der bewegliche Parallelschenkel und der feststehende Parallelschenkel sind durch zwei biegesteife Parallellenker mittels Dünnstellenbiegelager miteinander verbunden. Es können jedoch auch federnde Parallellenker eingesetzt werden, dann entfallen die Dünnstellenbiegelager. Beim Auflegen einer Last auf den Lastaufnehmer verschiebt sich das Kraftübertragungsgestänge in Lastrichtung, was eine Auslenkung der Parallellenker zur Folge hat und die Dünnstellenbiegelager oder elastischen Parallellenker biegt.

Die Parallelführung weist auf Grund ihrer Federkonstante in der Regel eine Rückstellkraft auf, welche ebenso wie eine auf den Lastaufnehmer aufgelegte Last eine Verschiebung der Spule bewirkt, und die ebenfalls kompensiert werden sollte.

In der US 3'968'850 A wie auch in der CH 593 481 A5 ist die Spule der Kraftkompensationsvorrichtung über dünne Drähte elektrisch mit einem regelbaren Stromkreis verbunden. Nachteilig an dieser Ausführung ist es, dass die Drähte neben der elektrischen Verbindung auch eine mechanische Verbindung vom feststehenden zum beweglichen Teil der Wägezelle herstellen. Dadurch wird eine zusätzliche Federkonstante in das Direktmesssystem eingebracht, welche auf die Parallelführung einwirkt und das Messergebnis verfälschen kann. Die Drähte werden in der Regel angelötet und sind besonders dünn und filigran ausgestaltet, um die zusätzlich auftretende Federkonstante möglichst klein zu halten. Die filigranen Drähte sind jedoch schwierig zu befestigen und es kann schnell geschehen, dass sich einer der Drähte löst und so die Funktionsfähigkeit der Waage nicht mehr gegeben ist.

Die Federkonstante, welche durch die mechanische Verbindung des beweglichen und des feststehenden Bereichs der Wägezelle über den Spulenstromkreis entsteht, beeinflusst vor allem die Ergebnisse von Wägezellen für den Niederlastbereich und/oder bei einer hohen Auflösung das Wägeergebnis, da dann selbst geringste Änderungen der Federkonstanten ausreichen, um eine Änderung des Messergebnisses zu verursachen.

In der EP 1 726 926 A1 werden Parallelführungen mit mindestens zwei Parallelführungsglieder offenbart. Diese können beispielsweise federnde, membranartige Parallelführungsglieder sein, in denen durch geeignete Durchbrechungen sowohl ein feststehender Parallelschenkel als auch ein beweglicher Parallelschenkel ausgebildet sind, welche über mindestens einen Parallellenker verbunden sind.

Weiterhin hat sich vor allem bei kompakten Wägemodulen mit Direktmesssystemen für Mehrfachwägevorrichtungen, wie sie beispielsweise in der EP 1 726 926 A1 offenbart werden, gezeigt, dass aufgrund einer unterschiedlichen thermischen Ausdehnung der mit dem Lagegeber verbundenen Teile der Parallelführung und/oder des Kraftübertragungsgestänges die Nullpunktdrift eines Direktmesssystems negativ beeinflusst wird.

Die EP 1 925 919 A1 schlägt für ein elektromagnetisches Kraftkompensations-Direktmesssystem, welches eine mehrteilige Parallelführung, und einen Lastaufnehmer aufweist vor, dass mindestens ein Teil der Parallelführung zur Übertragung elektrischer Signale ausgestaltet ist. Der Lastaufnehmer ist dabei über ein Kraftübertragungsgestänge mit einer Kraftkompensationsvorrichtung verbunden, welche mindestens einen Permanentmagneten und eine elektrisch mit einem regelbaren Stromkreis verbundene Spule aufweist.

Zur Bestimmung der Position der Spule nach Aufbringen der Last weist das Direktmesssystem aus EP 1 925 919 A1 einen Lagegeber auf. Die Position des Lagegebers kann mit einer geeigneten Abtastung ermittelt werden. Als Lagegeber kann beispielsweise ein Spalt verwendet werden, welcher am Kraftübertragungsgestänge angeordnet ist. Es sind verschiedene Abtastungen zur Kontrolle der Position des Lagegebers bekannt, wobei eine optische Abtastung bevorzugt wird. Es hat sich gezeigt, dass aufgrund einer unterschiedlichen thermischen Ausdehnung der mit dem Lagegeber verbundenen Teile der Parallelführung und/oder des Kraftübertragungsgestänges die Nullpunktdrift eines Direktmesssystems negativ beeinflusst wird. Um ein elektromagnetisches Kraftkompensations-Direktmesssystem mit einer möglichst geringen Nullpunktdrift zu erhalten muss, wie die EP 1 925 919 A1 lehrt, der Lagegeber im Wesentlichen mittig zwischen dem oberen und dem unteren Parallelführungsglied angeordnet sein. Um das Direktmesssystem so unempfindlich wie möglich gegenüber eines Nullpunktdrifts zu halten, ist das untere und das obere Parallelführungsglied zwischen dem Lastaufnehmer und der Kraftkompensationsvorrichtung angeordnet.

Robustheit bezeichnet die Fähigkeit eines Systems, Veränderungen ohne Anpassung seiner anfänglich stabilen Struktur standzuhalten. Die Robustheit eines Messsystems ist die Beständigkeit gegenüber Kräften, die nicht in Richtung der von der Last verursachten Verschiebung der Spule gegenüber dem Permanentmagneten wirken. Robustheit ist eine Voraussetzung für eine hohe Wiederholbarkeit einer Wägezelle, wie zum Beispiel die eines Direktmesssystems. Um die nötige Robustheit zu gewähren, müssen die Parallelführungsglieder in geeigneter Distanz zueinander liegen. Diese Distanz ist abhängig von der zu erwartenden maximalen Kraftkomponente, welche abweichend von der vorgesehenen Richtung der Spule gegenüber dem Permanentmagneten auftreten kann.

Mit den oben beschriebenen Voraussetzungen sind heute Direktmesssysteme auf dem Markt, zum Beispiel das WMC-Wägemodul von Mettler Toledo, welche eine kleine Grundfläche beanspruchen, jedoch eine relativ hohe Bauform aufweisen. Die gesamte Bauhöhe wird dabei immer bestimmt durch die Addition der Bauhöhe der Parallelführung respektive des Kraftübertragungsgestänges und der Bauhöhe der Kraftkompensationsvorrichtung.

Die Aufgabe der Erfindung liegt somit darin, den Kompaktheitsgrad eines elektromagnetischen Kraftkompensations-Direktmesssystems zu erhöhen, respektive die Bauhöhe zu verringern. Vorteilhafterweise soll dabei die Anzahl verbauter Teile gesenkt, sowie die Montage vereinfacht werden.

Diese Aufgabe wird mit einer Vorrichtung gelöst, welche die in den unabhängigen Ansprüchen angegebenen Merkmale aufweist. Vorteilhafte Ausgestaltungen der Erfindung sind in den weiteren, abhängigen Ansprüchen angegeben.

Bekannt ist ein elektromagnetisches Kraftkompensations-Direktmesssystem mit einem Lastaufnehmer, welcher über ein Kraftübertragungsgestänge mit einer Kraftkompensationsvorrichtung verbunden ist, und mit einer mehrteiligen Parallelführung, welche mindestens zwei durch das Kraftübertragungsgestänge beabstandete Parallelführungsglieder aufweist, wobei die Kraftkompensationsvorrichtung mindestens einen Permanentmagneten und eine mit einem regelbaren Stromkreis elektrisch verbundene Spule aufweist, und wobei mindestens ein Parallelführungsglied in den regelbaren Stromkreis elektrisch eingebunden ist. Erfindungsgemäss ist das Kraftübertragungsgestänge derart als einteiliger Spulenkörper ausgebildet, dass die Spule an diesem zwischen den Parallelführungsgliedern angeordnet und mit dem regelbaren Stromkreis elektrisch verbunden ist.

In einer ersten Ausführungsform des erfinderischen Direktmesssystems weist das mindestens eine in den regenbaren Stromkreis elektrisch eingebundene Parallelführungsglied zwei voneinander isolierte Stromführungen auf. Dabei ist jeweils eine Leiterbahn des Spulenkörpers mit jeweils einer Stromführung des mindestens einen Parallelführungsgliedes verbunden.

In einer zweiten Ausführungsform weist das erfinderische Direktmesssystem zwei in den regelbaren Stromkreis elektrisch eingebundene Parallelführungsglieder auf. In einer ersten Variante ist jeweils eine Leiterbahn des Spulenkörpers mit der Stromführung von jeweils einem der zwei Parallelführungsglieder verbunden. In einer weiterbildenden zweiten Variante sind die zwei Parallelführungsglieder vollständig aus einem elektrisch leitenden Material bestehend oder weisen jeweils mindestens eine elektrisch leitende Oberfläche auf, wobei der Spulenkörper an dessen Enden jeweils eine Stirnfläche aufweist, die als eine jeweils mit einer der zwei Leiterbahnen verbundene elektrische Kontaktstelle ausgebildet ist, über diese Stirnflächen das jeweilige Parallelführungsglied kontaktiert, und so in den regelbaren Stromkreis elektrisch eingebunden ist.

Der Begriff "mehrteilige Parallelführung" wird hier sowohl im Sinne von einer Parallelführung, welche aus mehreren Bauteilen besteht, als auch als Parallelführung mit mehreren funktionellen Bereichen bzw. Wirkteilen verwendet.

Durch die Ausbildung des Kraftübertragungsgestänges als einteiliger Spulenkörper ist es möglich die Spule zwischen den Parallelführungsgliedern anzuordnen, um so zu einem Direktmesssystem zu gelangen, das eine kompaktere Bauform aufweist.

In einer Weiterentwicklung der Erfindung besteht der Spulenkörper aus einem nichtleitenden Material. Weiter kann der Spulenkörper mindestens zwei voneinander isolierte elektrische Leiterbahnen aufweisen, wobei die erste Leiterbahn zur Spule hinführt und die zweite Leiterbahn von der Spule wegführt. Die in den Spulenkörper integrierten Leiterbahnen vereinfachen die Montage des Direktmesssystem bei dessen Herstellung.

In einer weiteren Weiterentwicklung der Erfindung ist der Spulenkörper als "Molded Interconnect Device" aufgebaut. Als Molded Interconnect Devices (englisch für: Spritzgegossene Schaltungsträger), kurz MID, werden spritzgegossene Kunststoffbauteile mit nach speziellen Verfahren aufgebrachten metallischen Leiterbahnen bezeichnet, die als Schaltungsträger für elektronische bzw. mechatronische Baugruppen dienen. MIDs können auf verschiedenste Art gefertigt werden. Die wichtigsten Verfahren zur Aufbringung der Leiterbahnen sowie von sendenden bzw. schirmenden Flächen sind der Zweikomponentenspritzguss, das Heissprägen, das Maskenbelichtungsverfahren, die Laserstrukturierung und das Folienhinterspritzen. Zumindest kann das Material des Spulenkörpers teilweise ein mit einer nichtleitenden laseraktivierbaren Metall-Verbindung als Kunststoff-Additiv dotierter thermoplastischer Kunststoff sein, auf welchem die elektrischen Leiterbahnen durch einen Laser aktiviert sind.

In einer anderen Weiterentwicklung weist die Kraftkompensationsvorrichtung des Direktmesssystems mindestens einen Permanentmagneten, mindestens einen Polschuh und ein Vorrichtungsgehäuse auf, wobei der Permanentmagnet, der Polschuh und das Vorrichtungsgehäuse fest miteinander verbunden sind. Der Spulenkörper zeichnet sich dabei dadurch aus, dass er einen Schaftbereich, einen konzentrisch zum Schaftbereich verlaufenden Wicklungsbereich für die Spule, und einen den Schaftbereich und den Wicklungsbereich verbindenden Steg aufweist, und dass das Vorrichtungsgehäuse zugleich das Gehäuse des Direktmesssystems bildet, wobei an dessen oberen und unteren Ende eine Durchführung für den Spulenkörper ausgebildet ist. Weiter kann der Spulenkörper mit einem ringsum verlaufenden Spalt beabstandet durch die Durchführung geführt sein. Dieser Spalt definiert das maximale horizontale Spiel zwischen Spulenkörper und Vorrichtungsgehäuse, wodurch das Vorrichtungsgehäuse dem Spulenkörper als horizontaler Anschlag dient.

In einer Weiterentwicklung des Spulenkörpers ist am Steg mindestens eine gegenüber dem Steg erhöhte Noppe ausgebildet, welche eine Distanz zum Polschuh als maximales vertikales Spiel definiert, und somit der Polschuh dem Spulenkörper als vertikaler Anschlag dient. Weiter kann vorgesehen werden, dass zwischen dem Schaftbereich und dem Steg mindestens eine Steife und am Polschuh eine Ausnehmung zur formschlüssigen Aufnahme der mindestens einen Steife ausgebildet ist, so dass die Steife und die Ausnehmung einen Verdrehschutz des Spulenkörpers gegenüber dem Vorrichtungsgehäuse bilden.

Die integrative Konstruktion von mehreren Funktionen in ein einzelnes Bauteil senkt die Anzahl verbauter Teile. So sind für das erfinderische Direktmesssystem keine zusätzlichen Baugruppen oder Schutzmechanismen vorzusehen, welche den Kompaktheitsgrad verschlechtern.

Als Stirnflächen werden erfindungsgemäss die Flächen bezeichnet, welche sich rechtwinklig zur Rotationsachse am oberen und unteren Ende des Schaftbereichs befinden und dafür vorgesehen sind mit den Parallelführungsglieder in Kontakt gebracht zu werden. Durch die Kontaktierung, und somit die Herstellung einer elektrisch leitenden Verbindung der Stirnflächen mit den Parallelführungsglieder in direkter Art und Weise, entfallen aufwändige Verdrahtungs- und Lötarbeiten.

Weiter kann die Kraftkompensationsvorrichtung ein Vorrichtungsgehäuse aufweisen, wobei in den Parallelführungsgliedern durch geeignete Durchbrechungen sowohl ein feststehender Parallelschenkel als auch ein beweglicher Parallelschenkel ausgebildet ist, welche über mindestens einen Parallellenker verbunden sind. Gemäss einer ersten Weiterentwicklung sind die Parallelführungsglieder an deren feststehenden Parallelschenkeln mittels eines elektrisch isolierenden Klebstoffes an dem Vorrichtungsgehäuse, oder mittels eines Klebstoffes auf einer elektrisch isolierenden Zwischenschicht an dem Vorrichtungsgehäuse fest angebracht. In einer zweiten Weiterentwicklung sind die Parallelführungsglieder an deren feststehenden Parallelschenkeln auf jeweils einer Leiterplatte fest aufgelötet, die Parallelführungsglieder Bestandteil der jeweiligen Leiterplatte, und sind die Leiterplatten wiederum an dem Vorrichtungsgehäuse mittels Schrauben oder mittels Klebstoff angebracht. Diese zweite Weiterentwicklung kann dahingehend verbessert werden, dass die Leiterplatten durch ein flexibles Leiterband verbunden als ein einstückiges Leiterplattenmodul ausgebildet sind.

Die direkte Befestigung eines Parallelführungsgliedes am Vorrichtungsgehäuse minimiert die Teileanzahl nochmals bedeutend. Werden Leiterplatten, oder ein Leiterplattenmodul zwischenliegend verwendet, nimmt man zwar eine erhöhte Anzahl Bauteile in Kauf, erhält jedoch im Gegenzug eine umso verbesserte Ausgestaltung bezüglich Vereinfachung der Montage und verbesserter mechanischer Verbindung zwischen Parallelführungsglieder und Vorrichtungsgehäuse, da Lötverbindungen eine vielfach bessere Dauerhaftigkeit aufweisen als Klebeverbindungen. Als grossen Vorteil angesehen werden kann, dass ein Parallelführungsglied vor dem eigentlichen Zusammenbau des Direktmesssystems schon in die Leiterplatte, bzw. das Leiterplattenmodul, eingelötet werden kann. Es entfallen Löt- oder Klebearbeiten am Montageplatz.

In einer Weiterentwicklung des Direktmesssystem mit einem Lagegeber ist der Lagegeber im für den Betrieb aufgestellten Zustand entweder über dem oberen Parallelführungsglied oder unter dem unteren Parallelführungsglied angeordnet.

### Detailbeschreibung der Erfindung

Einzelheiten der erfindungsgemässen Kraftmessvorrichtung, ergeben sich anhand der Beschreibung der in den Zeichnungen dargestellten Ausführungsbeispiele. Es zeigen:
- Fig. 1: Direktmesssystem im Schnitt mit einem Lastaufnehmer, einem Kraftübertragungsgestänge, einer Parallelführung und einer Kraftkompensationsvorrichtung;
- Fig. 2A: eine perspektivische Darstellung des Direktmesssystem in zusammengebautem Zustand;
- Fig. 2B: eine Explosionsdarstellung des Direktmesssystem;
- Fig. 2C: ein Leiterplattenmodul zur Explosionsdarstellung aus Figur 2B zugehörig;
- Fig. 3A: eine perspektivische Darstellung des Kraftübertragungsgestänge als einteiliger Spulenkörper;
- Fig. 3B: eine Schnittdarstellung des Spulenkörpers aus Figur 3A durch die Ebene E, und
- Fig. 4: ein Leiterplattenmodul wie aus Figur 2C, in ebener, flach ausgelegter Darstellung.

Merkmale mit gleicher Funktion und ähnlicher Ausgestaltung sind in der folgenden Beschreibung mit denselben Bezugszeichen versehen.

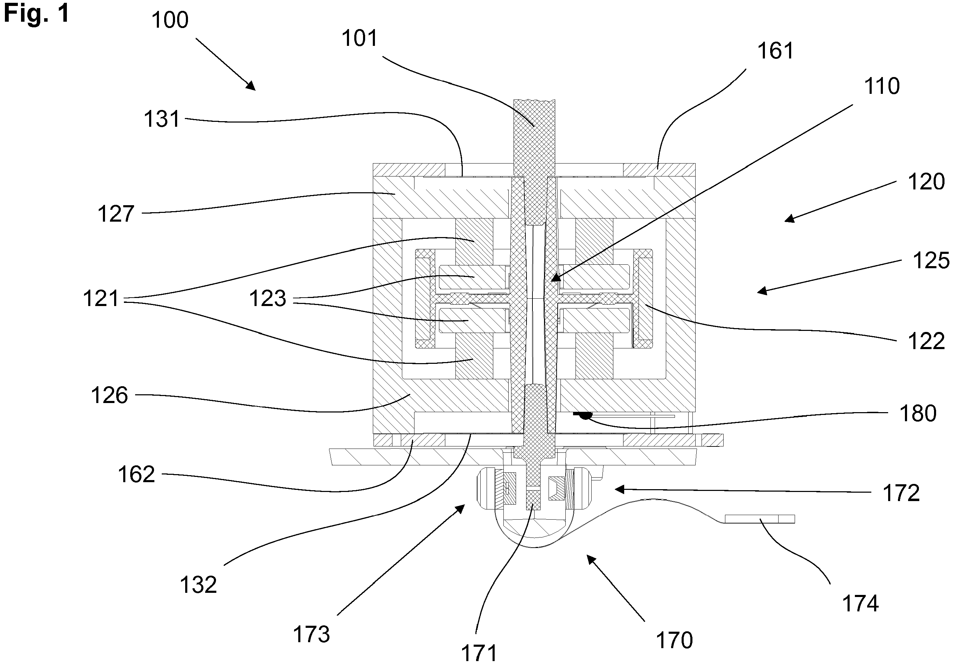

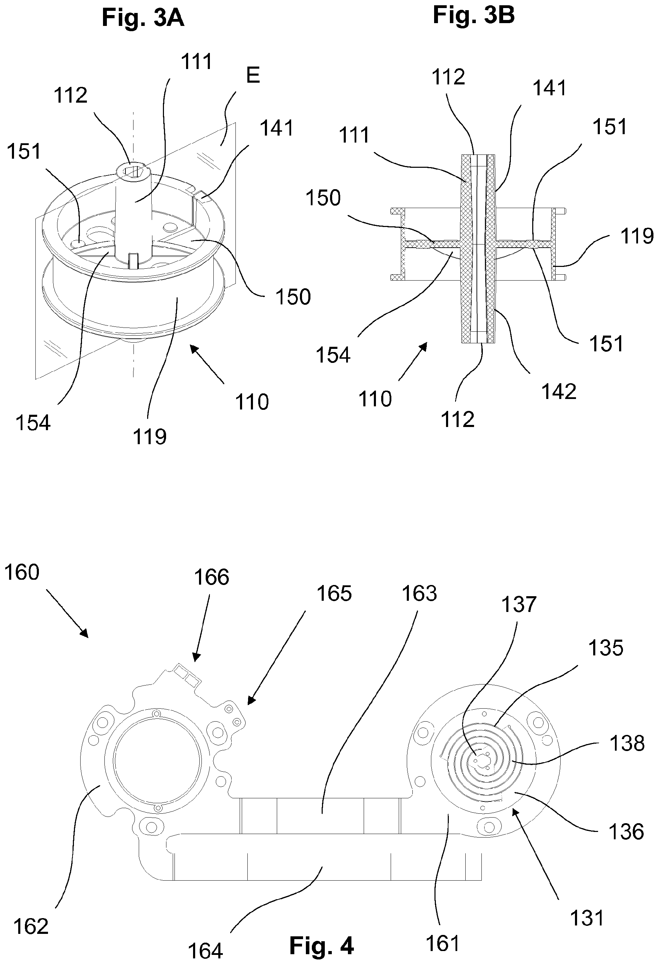

Das Direktmesssystem 100 in Figur 1 ist in einem Schnitt dargestellt und weist einen Lastaufnehmer 101 auf, welcher über ein Kraftübertragungsgestänge 110 mit einen Lagegeber 170 verbunden ist. Der Lastaufnehmer 101, die Spule 122 der Kraftkompensationsvorrichtung 120, sowie die Abtastfahne 171 des Lagegebers 170 werden gegenüber dem Vorrichtungsgehäuse 125 der Kraftkompensationsvorrichtung 120 präzise geführt. Dies geschieht über eine mehrteilige Parallelführung, welche zwei Parallelführungsglieder 131, 132 umfasst, deren Aufbau anhand der Figur 4 näher erläutert wird. Am Kraftübertragungsgestänge 110 sind die beweglichen Parallelschenkel 137 (siehe Figur 4) der beiden Parallelführungsglieder 131, 132 angebracht, während die feststehenden Parallelschenkel 136 (siehe Figur 4) mit dem Vorrichtungsgehäuse 125 der Kraftkompensationsvorrichtung 120 über jeweils eine Leiterplatte 161, 162 starr in Verbindung sind.

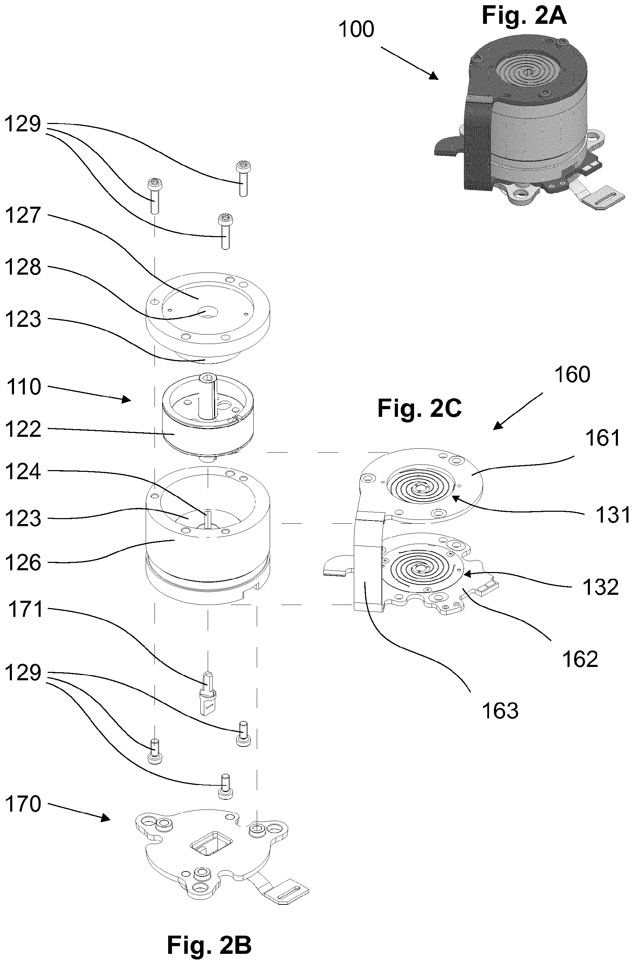

Die Kraftkompensationsvorrichtung 120 besteht hier aus zwei Permanentmagneten 121 zwischen denen ein zweiteiliger Polschuh 123 angeordnet ist. Der geteilte Polschuh 123 wird von einer Spule 122 umgeben, die sich in dem Luftspalt zwischen dem eben genannten Polschuh 123 und dem Gehäusekörper 126 des Vorrichtungsgehäuse 125 bewegt. Das Kraftübertragungsgestänge ist dabei als einteiliger Spulenkörper 110 ausgebildet und vereint somit die Funktionen eines einfachen Kraftübertragungsgestänges und die eines Spulenträgers, wie er zum Beispiel in den Figuren 1 und 2 der EP 1 925 919 A1 gezeigt ist.

Die beiden Parallelführungsglieder 131, 132 sind jeweils auf einer Leiterplatte 161, 162 angebracht, welche wiederum mit dem Gehäusedeckel 127 oder dem Gehäusekörper 125 des Vorrichtungsgehäuses 125 der Kraftkompensationsvorrichtung 120 verbunden ist. Das Direktmesssystem 100 ist nun derart mit geeigneten Leiterbahnen und Kontaktstellen an den Leiterplatten 161, 162, den Parallelführungsgliedern 131, 132, und dem Spulenkörper 110 ausgestaltet, dass die Spule 122 mit dem regelbaren Stromkreis elektrisch verbunden ist. Auf diese Weise wird der Spulenstrom zur Spule 122 geführt und abgeleitet, ohne eine zusätzliche mechanische Verbindung zwischen dem feststehenden und dem beweglichen Bereich des Direktmesssystems 100 herzustellen.

Die hier verwendete Kontrolle der Position des Lastaufnehmers 101 ist eine optische Abtastung. Licht, welches vom Lichtemitter 172 ausgestrahlt durch den Schlitz der Abtastfahne 171 gelangt, trifft auf den Lichtempfänger 173, der ein die Position der Abtastfahne 171, respektive des Lastaufnehmers 101, entsprechendes Lagesignal ausgibt. An der Verbindungslasche 174 ist das Signal des Lagegebers 170 abgreifbar.

Ein Temperatursensor 180 liefert ein Temperatursignal, das bei der Berechnung der auf den Lastaufnehmer 101 wirkenden Kraft in der Verarbeitungseinheit dazu verwendet werden kann, Abweichungen aufgrund thermischer Einflüsse zu kompensieren.

In Figur 2A ist das Direktmesssystem 100 in perspektivischer Ansicht und in zusammengebautem Zustand gezeigt. Nach Zusammenführen der in der Explosionsdarstellung der Figur 2B und in der Figur 2C gezeigten Bauteilen entsteht ein elektromagnetisches Kraftkompensations-Direktmesssystems mit hohem Kompaktheitsgrad. Auch die Anzahl Bauteile ist übersichtlich, da das Vorrichtungsgehäuse 125 der Kraftkompensationsvorrichtung 120 zugleich die Aussenhülle des Direktmesssystems 100 bildet.

Die Explosionsdarstellung in Figur 2B zeigt das Direktmesssystems 100 aus Figur 1. Im Gehäusekörper 126 bereits angeordnet sind der Permanentmagnet (nicht sichtbar) und der untere Teil des Polschuhs 123. Dieser Polschuh 123 weist Ausnehmungen 124 auf, in welche die Steife 154 des Spulenkörpers 110 (siehe Figuren 3A und 3B) zu liegen kommt. Der Spulenkörper 110 mit Spule 122 ist dadurch definiert ausgerichtet und gegen ein Verdrehen geschützt. Unterhalb des Gehäusedeckels 127 ist ein weiterer Permanentmagnet (nicht sichtbar) und der obere Teil des Polschuhs 123 angebracht. Dieser Polschuh 123 kann ebenfalls Ausnehmungen aufweisen. Der Gehäusedeckel 127 und der Gehäusekörper 126 haben je eine Durchführung 128 für den Spulenkörper 110 um mit den Parallelführungsgliedern 131, 132 (Figur 2C) verbunden zu werden.

Da der Gehäusekörper 126 und der Gehäusedeckel 127 zusätzlich auch die Magnetfeldlinien leiten sollen, sind sie zum Magnetsystem zugehörig zu betrachten. Für ein starkes und homogenes Magnetfeld sind Gehäusekörper 126 und Gehäusedeckel 127 aus einem metallischen Werkstoff gefertigt. Bei einer Zu- und Abführung des Spulenstroms über mindestens ein Parallelführungsglied 131, 132 muss dieses natürlich zum Gehäusekörper 126, beziehungsweise zum Gehäusedeckel 127, elektrisch isoliert werden.

Das in Figur 2C gezeigte Leiterplattenmodul 160 wird um das Vorrichtungsgehäuse 125 gelegt und mittels Gehäuseschrauben 129 mit diesem fest verbunden. Die Leiterplatten 161, 162 isolieren das entsprechende Parallelführungsglied 131, 132 gegenüber dem Gehäusekörper 126, respektive gegenüber dem Gehäusedeckel 127. An den Kontaktstellen des Spulenkörpers 110 und den Parallelführungsgliedern 131, 132 sorgt hier eine Lötverbindung für die Entstehung der exakten Führung des Spulenkörpers 110 innerhalb der Kraftkompensationsvorrichtung 120.

Die Abtastfahne 171 wird von unten her an den Spulenkörper 110 befestigt und positioniert sich schliesslich in der optischen Achse zwischen Lichtemitter 172 und Lichtempfänger 173. Der Lagesensors 170 wird von unten an den Gehäusekörper 125 angelegt befestigt.

Die Figur 3A und die Figur 3B zeigen dasselbe Kraftübertragungsgestänge ausgebildet als einteiliger Spulenkörper 110, und werden im Folgenden im Wesentlichen gemeinsam beschrieben. Einmal in perspektivischer Ansicht (Figur 3A) und als Schnitt durch die entlang der Rotationsachse verlaufende Ebene E (Figur 3B).

Der Spulenkörper 110 weist entlang der Rotationsachse und zwischen den Flächen 112 einen Schaftbereich 111 auf, der wiederum über einen Steg 150 mit einem Wicklungskörper 119 verbunden ist. Der Wicklungskörper 119 allein betrachtet hat die Form eines Ringes mit einem Rotationsquerschnitt eines mit einer Vertiefung versehenes Rechteck. In diese umlaufende Vertiefung wird der Spulendraht zu einer Spule (122, Figur 1) aufgewickelt. Der Steg 150 ist hier symmetrisch zwischen den Stirnseiten 112 des Schaftbereichs 111 positioniert. Möglich wären auch andere Anordnungen, wie zum Beispiel am oberen oder unteren Ende des Wicklungskörpers 119, wobei damit verbunden auch der Permanentmagnet 121 und der Polschuh 123 angepasst werden müssten.

Auf der oberen und der unteren Oberfläche des Steges 150 sind Noppen 151 angeordnet. Diese Noppen 151 haben eine leicht erhöhte zum Steg 150 parallele Oberfläche, welche im zusammengebauten Zustand des Direktmesssystems eine Distanz zum Polschuh 123 als maximales vertikales Spiel definieren, so dass eine übermässige Verschiebung bzw. Auslenkung des Spulenkörpers 110 keine Schäden an den Parallelführungsgliedern verursacht. Zum Schutz gegen Verdrehung der Parallelführungen sind hier zwischen dem Schaftbereich 110 und dem Steg 150 zu beiden Seiten dessen, vier Steifen 154 ausgebildet. Diese Steifen 154 werden im zusammengebauten Zustand in den oben zur Figur 1 erwähnten Ausnehmungen 124 des Polschuhs 123 aufgenommen. Natürlich sind auch andere Anordnungen und Anzahl der Steifen 154 denkbar als in den Figuren 3A und 3B dargestellt.

Weiter zeigen Figur 3A und die Figur 3B der Ausführungsform des Spulenkörpers 110 die isolierten elektrischen Leiterbahnen 141, 142. Die erste Leiterbahn 141 verläuft von der oberen Stirnfläche 112 über die Mantelfläche des Schaftbereichs 111, der oberen Oberfläche des Stegs 150 und über die Innenseite des Wickelkörpers 119 entlang zu einer Kontaktfläche auf der oberen Stirnseite des Wickelkörpers 119. Die zweite Leiterbahn 142 verläuft ausgehend von der unteren Stirnfläche 112 aus auf die gleiche Art und Weise zu einer Kontaktfläche auf der unteren Stirnseite des Wickelkörpers 119. An diesen beiden Kontaktflächen werden die Enden des Spulendrahtes angebracht, wobei sich nun die Spule 122 durch Kontakt der Stirnflächen 112 mit den Parallelführungsgliedern bestromen lässt.

Der Verlauf der isolierten elektrischen Leiterbahnen 141, 142 können auch zur gleichen Seite des Stegs 150 angeordnet sein, wobei dann das sich zu dieser Seite des Stegs 150 befindliche Parallelführungsglied zwei voneinander isolierte Stromführungen aufweist, so dass jeweils eine Leiterbahn 141, 142 mit jeweils einer Stromführung des Parallelführungsgliedes verbunden ist. Die Ausgestaltung dieser Stromführungen sind ausführlicher in EP 1 925 919 A1 beschrieben.

Figur 4 zeigt das Leiterplattenmodul 160, wie es schon in der Figur 2C zu sehen ist, jedoch in ebener, flach ausgelegter Darstellung. Die obere Leiterplatte 161 und die untere Leiterplatte 162 liegen verbunden durch das Leiterband 163 nebeneinander mit der Seite zum Betrachter hin orientiert, welche im zusammengebauten Zustand an das Vorrichtungsgehäuse 125 anliegen. Die Leiterplatten 161, 162 haben je eine Ausnehmung für die Aufnahme des jeweiligen Parallelführungsglieds 131, 132, wobei hier in Figur 4 nur das obere Parallelführungsglied 131 gezeigt ist. Über zwei voneinander isolierte Stromführungen, die durch das flexible Leiterband 163 und ein flexibles Bestromungsband 164 führen, sind die jeweiligen Parallelführungsglieder mit der Stromquelle verbunden. Weitere Kontaktstellen 165, 166, zum Beispiel für den Temperatursensor 180 oder den Lagegeber 170 (beide Figur 1), können in eine Leiterplatte 161, 162, respektive in ein Leiterplattenmodul 160 integriert werden. Die Signale sind dann auch am Ende des Bestromungsbandes 164 abgreifbar.

Anhand des in Figur 4 gezeigten oberen Parallelführungsglieds 131 wird nun kurz auf die Ausgestaltung der in den Figuren 1, 2A, und 2C gezeigten Parallelführungsglieder eingegangen. Figur 4 zeigt eine Aufsicht auf das obere Parallelführungsglied 131, welches hier drei spiralförmige Durchbrechungen 135 aufweist, durch die ein mit dem Spulenkörper 110 verbindbarer beweglicher Parallelschenkel 137, ein mit dem Vorrichtungsgehäuse 125 verbindbarer feststehender Parallelschenkel 136 sowie drei den feststehenden und den beweglichen Parallelschenkel verbindende Parallellenker 138 ausgebildet werden. Der Spulenkörper 110 wird so, wie in Figur 1 gezeigt, in den Durchführungen 128 des Vorrichtungsgehäuses 125 geführt.

In EP 1 925 919 A1 sind ebenfalls weitere mögliche Ausgestaltungen von Parallelführungsglieder gezeigt, wie zum Beispiel Parallelführungsglieder mit zwei elektrischen Leiterbahnen, Parallelführungsglieder aus einem elektrischen Isolator, auf den zur Ausbildung von Leiterbahnen ein elektrisch leitendes Material aufgebracht ist, oder Parallelführungsglieder, welche U-förmige Durchbrechungen aufweisen. Die voran beschriebenen Elemente der Ausführungsform des Spulenkörpers und der Parallelführungsglieder können auf beliebige Art und Weise miteinander kombiniert werden, einzig mit der Vorgabe, dass schlussendlich die Spule mit dem regelbaren Stromkreis elektrisch verbunden ist.

### Liste der Bezugszeichen

- 100: (Elektromagnetisches Kraftkompensations-) Direktmesssystem
- 101: Lastaufnehmer
- 110: Spulenkörper / Kraftübertragungsgestänge
- 111: Schaftbereich
- 112: Stirnfläche / Kontaktstelle
- 119: Wickelbereich
- 120: Kraftkompensationsvorrichtung
- 121: Permanentmagnet
- 122: Spule
- 123: Polschuh
- 124: Ausnehmung
- 125: Vorrichtungsgehäuse
- 126: Gehäusekörper
- 127: Gehäusedeckel
- 128: Durchführung
- 129: Gehäuseschrauben
- 131: oberes Parallelführungsglied
- 132: unteres Parallelführungsglied
- 135: Durchbrechung
- 136: feststehender Parallelschenkel
- 137: beweglicher Parallelschenkel
- 138: Parallellenker
- 141: erste Leiterbahn
- 142: zweite Leiterbahn
- 150: Steg
- 151: Noppe
- 154: Steife
- 160: Leiterplattenmodul
- 161: obere Leiterplatte
- 162: untere Leiterplatte
- 163: flexibles Leiterband
- 164: Bestromungsband
- 165: Elektrische Kontaktstellen für Temperatursensor
- 166: Elektrische Kontaktstellen für Lagegeber
- 170: Lagegeber
- 171: Abtastfahne
- 172: Lichtemitter
- 173: Lichtempfänger
- 174: Verbindungslasche zu Kontaktstellen
- 180: Temperatursensor

## Patentansprüche

1. Elektromagnetisches Kraftkompensations-Direktmesssystem (100) mit
einem Lastaufnehmer (101), welcher über ein Kraftübertragungsgestänge mit einer Kraftkompensationsvorrichtung (120) verbunden ist, und mit
einer mehrteiligen Parallelführung, welche mindestens zwei durch das Kraftübertragungsgestänge beabstandete Parallelführungsglieder (131, 132) aufweist, wobei die Kraftkompensationsvorrichtung (120) mindestens einen Permanentmagneten (121) und eine mit einem regelbaren Stromkreis elektrisch verbundene Spule (122) aufweist, und
wobei das Kraftübertragungsgestänge derart als einteiliger Spulenkörper (110) ausgebildet ist, dass die Spule (122) an diesem zwischen den Parallelführungsgliedern (131, 132) angeordnet und mit dem regelbaren Stromkreis elektrisch verbunden ist
**dadurch gekennzeichnet, dass**
der Spulenkörper (110) mindestens zwei voneinander isolierte elektrische Leiterbahnen (141, 142) aufweist, wobei die erste Leiterbahn (141) zur Spule (122) hinführt und die zweite Leiterbahn (142) von der Spule (122) wegführt, und dass
entweder
mindestens ein Parallelführungsglied (131, 132) in den regelbaren Stromkreis elektrisch eingebunden ist und zwei voneinander isolierte Stromführungen aufweist, und
jeweils eine Leiterbahn (141, 142) des Spulenkörpers (110) mit jeweils einer Stromführung des mindestens einen Parallelführungsgliedes (131, 132) verbunden ist, oder
zwei Parallelführungsglieder (131, 132) in den regelbaren Stromkreis elektrisch eingebunden sind, und
jeweils eine Leiterbahn (141, 142) des Spulenkörpers (110) mit der Stromführung von jeweils einem der zwei Parallelführungsglieder (131, 132) verbunden ist.

2. Direktmesssystem nach Anspruch 1,
**dadurch gekennzeichnet, dass**
der Spulenkörper (110) aus einem nichtleitenden Material besteht.

3. Direktmesssystem, nach Anspruch 1,
**dadurch gekennzeichnet, dass**
das Material des Spulenkörpers (110) zumindest teilweise ein mit einer nichtleitenden laseraktivierbaren Metall-Verbindung als Kunststoff-Additiv dotierter thermoplastischer Kunststoff ist, auf welchem die elektrischen Leiterbahnen (141, 142) durch einen Laser aktiviert sind.

4. Direktmesssystem, nach einem der Ansprüche 1 bis 3,
wobei die Kraftkompensationsvorrichtung (120)
mindestens einen Permanentmagneten (121),
mindestens einen Polschuh (123) und
ein Vorrichtungsgehäuse (125) aufweist,
wobei der Permanentmagnet (121), der Polschuh (123) und das Vorrichtungsgehäuse (125) fest miteinander verbunden sind,
**dadurch gekennzeichnet, dass**
der Spulenkörper (110)
einen Schaftbereich (111),
einen konzentrisch zum Schaftbereich (111) verlaufenden Wicklungsbereich (119) für die Spule (122), und
einen den Schaftbereich (111) und den Wicklungsbereich (119) verbindenden Steg (150) aufweist,
und dass das Vorrichtungsgehäuse (125) zugleich das Gehäuse des Direktmesssystems (100) bildet, wobei an dessen oberen und unteren Ende eine Durchführung (128) für den Spulenkörper (110) ausgebildet ist.

5. Direktmesssystem, nach Anspruch 4,
**dadurch gekennzeichnet, dass**
der Spulenkörper (110) mit einem ringsum verlaufenden Spalt beabstandet durch die Durchführung (128) geführt ist und dieser Spalt das maximale horizontale Spiel des Spulenkörpers (110) gegenüber dem Vorrichtungsgehäuse (125) definiert.

6. Direktmesssystem, einem der Ansprüche 4 oder 5,
**dadurch gekennzeichnet, dass**
am Steg (150) mindestens eine gegenüber dem Steg (150) erhöhte Noppe (151) ausgebildet ist, welche eine Distanz zum Polschuh (123) als maximales vertikales Spiel definiert.

7. Direktmesssystem, einem der Ansprüche 4 bis 6,
**dadurch gekennzeichnet, dass**
zwischen dem Schaftbereich (110) und dem Steg (150) mindestens eine Steife (154) und am Polschuh (123) eine Ausnehmung (124) zur Aufnahme der mindestens einen Steife (154) ausgebildet ist,
so dass die Steife (154) und die Ausnehmung (124) einen Verdrehschutz des Spulenkörpers (110) gegenüber dem Vorrichtungsgehäuse (125) bilden.

8. Direktmesssystem, nach Anspruch 1,
wobei die zwei in den regelbaren Stromkreis elektrisch eingebundenen Parallelführungsglieder (131, 132) vollständig aus einem elektrisch leitenden Material bestehen oder jeweils mindestens eine elektrisch leitende Oberfläche aufweisen,
**dadurch gekennzeichnet, dass**
der Spulenkörpers an dessen Enden jeweils eine Stirnfläche (112) aufweist, die als eine jeweils mit einer der zwei Leiterbahnen (141, 142) verbundene elektrische Kontaktstelle ausgebildet ist, über diese Stirnflächen (112) das jeweilige Parallelführungsglied (131, 132) kontaktiert, und so in den regelbaren Stromkreis elektrisch eingebunden ist.

9. Direktmesssystem, nach einem der Ansprüche 1 bis 8,
wobei die Kraftkompensationsvorrichtung (120) ein Vorrichtungsgehäuse (125) aufweist, und
wobei in den Parallelführungsgliedern (131, 132) durch geeignete Durchbrechungen (135) sowohl ein feststehender Parallelschenkel (136) als auch ein beweglicher Parallelschenkel (137) ausgebildet ist, welche über mindestens einen Parallellenker (138) verbunden sind,
**dadurch gekennzeichnet, dass**
die Parallelführungsglieder (131, 132) an deren feststehenden Parallelschenkeln (136)
mittels eines elektrisch isolierenden Klebstoffes an dem Vorrichtungsgehäuse (125) fest angebracht sind, oder
mittels eines Klebstoffes auf einer elektrisch isolierenden Zwischenschicht an dem Vorrichtungsgehäuse (125) fest angebracht sind

10. Direktmesssystem nach einem der Ansprüche 1 bis 9,
wobei die Kraftkompensationsvorrichtung (120) ein Vorrichtungsgehäuse (125) aufweist, und
wobei in den Parallelführungsgliedern (131, 132) durch geeignete Durchbrechungen (135) sowohl ein feststehender Parallelschenkel (136) als auch ein beweglicher Parallelschenkel (137) ausgebildet ist, welche über mindestens einen Parallellenker (138) verbunden sind,
**dadurch gekennzeichnet, dass**
die Parallelführungsglieder (131, 132) an deren feststehenden Parallelschenkeln (136) auf jeweils eine Leiterplatte (161, 162) fest aufgelötet und Bestandteil derer sind, und dass
die Leiterplatten (161, 162) wiederum an dem Vorrichtungsgehäuse (125) mittels Schrauben (129) oder mittels Klebstoff angebracht sind.

11. Direktmesssystem nach Anspruch 10,
**dadurch gekennzeichnet, dass**
die Leiterplatten (161, 162) durch ein flexibles Leiterband (163) verbunden als ein einstückiges Leiterplattenmodul (160) ausgebildet sind.

12. Direktmesssystem nach einem der vorangehenden Ansprüche,
mit einem Lagegeber (170)
**dadurch gekennzeichnet, dass**
der Lagegeber (170) im für den Betrieb aufgestellten Zustand entweder über dem oberen Parallelführungsglied (131) oder unter dem unteren Parallelführungsglied (132) angeordnet ist.

## Claims

1. An electromagnetic force compensation direct measuring system (100) with
a load receiver (101) which is connected via a force transmission linkage to a force compensation device (120), and with
a multi-part parallel guide, which has at least two parallel guide elements (131, 132) spaced apart by the force transmission linkage, wherein the force compensation device (120) has at least one permanent magnet (121) and a coil (122) electrically connected to a controllable electric circuit, and
wherein the force transmission linkage is formed as a one-part coil body (110) in such a way that the coil (122) is arranged on it between the parallel guide elements (131, 132) and is electrically connected to the controllable electric circuit,
**characterised in that**
the coil body (110) has at least two electrical conductor tracks (141, 142) insulated from one another, wherein the first conductor track (141) leads to the coil (122) and the second conductor track (142) leads away from the coil (122), and **in that** either
at least one parallel guide element (131, 132) is electrically integrated into the controllable electric circuit and has two electric guides that are insulated from one another, and
in each case one conductor track (141, 142) of the coil body (110) is connected to a respective electric guide of the at least one parallel guide element (131, 132),
or
two parallel guide elements (131, 132) are electrically integrated into the controllable electric circuit, and
in each case one conductor track (141, 142) of the coil body (110) is connected to the electric guide of respectively one of the two parallel guide elements (131, 132).

2. The direct measuring system according to claim 1, **characterised in that**
the coil body (110) consists of a non-conductive material.

3. The direct measuring system according to claim 1, **characterised in that**
the material of the coil body (110) is at least partially a thermoplastic doped with a non-conductive, laser-activatable metal compound as a plastic additive, on which the electrical conductor tracks (141, 142) are activated by a laser.

4. The direct measuring system according to one of claims 1 to 3,
wherein the force compensation device (120) has
at least one permanent magnet (121),
at least one pole shoe (123), and
a device housing (125),
wherein the permanent magnet (121), the pole shoe (123) and the device housing (125) are firmly connected to one another, **characterised in that**
the coil body (110) has
a shaft area (111),
a winding area (119) for the coil (122) running concentrically to the shaft area (111), and
a web (150) connecting the shaft area (111) and the winding area (119),
and **in that** the device housing (125) at the same time forms the housing of the direct measuring system (100), wherein a passage (128) for the coil body (110) is formed at its upper and lower end.

5. The direct measuring system according to claim 4, **characterised in that** the coil body (110) is guided through the passage (128) with a circumferentially running gap and this gap defines the maximum horizontal play of the coil body (110) relative to the device housing (125).

6. The direct measuring system according to one of claims 4 or 5, **characterised in that** at least one nub (151) which is higher than the web (150) is formed on the web (150) and which defines a distance from the pole shoe (123) as the maximum vertical play.

7. The direct measuring system according to one of claims 4 to 6, **characterised in that**
at least one stiffener (154) is formed between the shaft area (110) and the web (150) and a recess (124) is formed on the pole shoe (123) for receiving the at least one stiffener (154),
so that the stiffener (154) and the recess (124) form a twist protection of the coil body (110) relative to the device housing (125).

8. The direct measuring system according to claim 1,
wherein the two parallel guide elements (131, 132) that are electrically integrated into the controllable electric circuit consist entirely of an electrically conductive material or each have at least one electrically conductive surface, **characterised in that**
the coil body has at its ends a respective end face (112) which is formed as an electrical contact point respectively connected to one of the two conductor tracks (141, 142) and contacts the respective parallel guide element (131, 132) via these end faces (112), and is thus electrically integrated into the controllable electric circuit.

9. The direct measuring system according to one of claims 1 to 8,
wherein the force compensation device (120) has a device housing (125), and
wherein both a fixed parallel leg (136) and a movable parallel leg (137) are formed in the parallel guide elements (131, 132) through suitable openings (135), which parallel legs are connected via at least one parallel link (138), **characterised in that** the parallel guide links (131, 132) on their fixed parallel legs (136)
are fixedly attached to the device housing (125) by means of an electrically insulating adhesive, or
are fixedly attached to the device housing (125) by means of an adhesive on an electrically insulating intermediate layer.

10. The direct measuring system according to one of claims 1 to 9,
wherein the force compensation device (120) has a device housing (125), and
wherein both a fixed parallel leg (136) and a movable parallel leg (137) are formed in the parallel guide elements (131, 132) through suitable openings (135), which parallel legs are connected via at least one parallel link (138), **characterised in that**
the parallel guide elements (131, 132) on their fixed parallel legs (136) are fixedly soldered to a printed circuit board (161, 162) and are part of it, and **in that**
the printed circuit boards (161, 162) are in turn attached to the device housing (125) by means of screws (129) or by means of adhesive.

11. The direct measuring system according to claim 10, **characterised in that**
the printed circuit boards (161, 162) are formed as a one-part printed circuit board module (160) connected by a flexible conductor strip (163).

12. The direct measuring system according to one of the preceding claims,
with a position sensor (170), **characterised in that**
the position sensor (170) in the state set up for operation is arranged either above the upper parallel guide member (131) or below the lower parallel guide member (132).

## Revendications

1. Système de mesure directe de compensation de force électromagnétique (100) avec
un récepteur de charge (101) qui est relié à un dispositif de compensation de force (120) via une tringlerie de transmission de force, et avec
un guidage parallèle en plusieurs parties, qui présente au moins deux éléments de guidage parallèle (131, 132) espacés par la tringlerie de transmission de force, dans lequel le dispositif de compensation de force (120) présente au moins un aimant permanent (121) et une bobine (122) reliée électriquement à un circuit électrique réglable, et
dans lequel la tringlerie de transmission de force est conçue comme un corps de bobine monobloc (110) de sorte que la bobine (122) est disposée sur celle-ci entre les éléments de guidage parallèle (131, 132) et est électriquement connectée au circuit réglable
**caractérisé en ce que**
le corps de bobine (110) présente au moins deux pistes conductrices électriques (141, 142) isolées l'une de l'autre, dans lequel la première piste conductrice (141) menant à la bobine (122) et la seconde piste conductrice (142) s'éloignant de la bobine (122), et que soit
au moins un élément de guidage parallèle (131, 132) est intégré électriquement dans le circuit réglable et présente deux guidages de courant isolés l'un de l'autre, et
une piste conductrice (141, 142) du corps de bobine (110) est à chaque fois reliée à un guide de courant respectif de l'au moins un élément de guidage parallèle (131, 132), ou soit
deux éléments de guidage parallèle (131, 132) sont intégrés électriquement dans le circuit réglable, et
une piste conductrice (141, 142) du corps de bobine (110) est à chaque fois reliée à l'alimentation électrique de l'un des deux éléments de guidage parallèle respectifs (131, 132).

2. Système de mesure directe selon la revendication 1, **caractérisé en ce que**
la bobine (110) est réalisée en un matériau non conducteur.

3. Système de mesure directe selon la revendication 1, **caractérisé en ce que**
le matériau du corps de bobine (110) est au moins partiellement un thermoplastique doté d'un composé métallique non conducteur activable au laser en tant qu'additif plastique, sur lequel les pistes conductrices électriques (141, 142) sont activées par un laser.

4. Système de mesure directe selon l'une des revendications 1 à 3,
dans lequel le dispositif de compensation de force (120) présente
au moins un aimant permanent (121),
au moins un sabot polaire (123) et
un boîtier de dispositif (125),
dans lequel l'aimant permanent (121), le sabot polaire (123) et le boîtier de dispositif (125) sont solidement reliés l'un à l'autre, **caractérisé en ce que**
le corps de bobine (110) présente
une zone d'arbre (111),
une zone d'enroulement (119) pour la bobine (122) s'étendant concentriquement jusqu'à la zone d'arbre (111), et
une passerelle (150) reliant la zone d'arbre (111) et la zone d'enroulement (119), et **en ce que** le boîtier de dispositif (125) forme également le boîtier du système de mesure directe (100), dans lequel un passage (128) pour le corps de bobine (110) est formé à ses extrémités supérieure et inférieure.

5. Système de mesure directe, selon la revendication 4, **caractérisé en ce que**
le corps de bobine (110) est espacé à travers la douille (128) à raison d'un espace circonférentiel et cet espace définit le jeu horizontal maximal du corps de bobine (110) par rapport au boîtier de dispositif (125).

6. Système de mesure directe, selon l'une des revendications 4 ou 5, **caractérisé en ce que** au moins un bossage (151) réhaussé par rapport à la passerelle (150) est formé sur la passerelle (150) et définit une distance par rapport au sabot polaire (123) comme jeu vertical maximum.

7. Système de mesure directe, selon l'une des revendications 4 à 6, **caractérisé en ce que** au moins un raidisseur (154) est formé entre la zone d'arbre (110) et la passerelle (150) et un évidement (124) est formé sur le sabot polaire (123) pour recevoir l'au moins un raidisseur (154),
de sorte que le raidisseur (154) et l'évidement (124) forment une protection en torsion du corps de bobine (110) par rapport au boîtier de dispositif (125).

8. Système de mesure directe selon la revendication 1,
dans lequel les deux éléments de guidage parallèle (131, 132) intégrés électriquement dans le circuit électrique réglable sont entièrement constitués d'un matériau électriquement conducteur ou présentent chacun au moins une surface électriquement conductrice, **caractérisé en ce que**
le corps de bobine présente à ses extrémités une face frontale (112) qui est conçue comme un point de contact électrique relié à l'une des deux pistes conductrices (141, 142), contacte l'élément de guidage parallèle (131, 132) respectif via ces faces frontales (112), et est ainsi intégré électriquement dans le circuit réglable.

9. Système de mesure directe selon l'une des revendications 1 à 8,
dans lequel le dispositif de compensation de force (120) présente un boîtier de dispositif (125), et
dans lequel à la fois un bras parallèle fixe (136) et un bras parallèle mobile (137) sont formés dans les éléments de guidage parallèle (131, 132) à travers des ouvertures appropriées (135), qui sont reliées par au moins une liaison parallèle (138), **caractérisé en ce que**
les éléments de guidage parallèle (131, 132) sur leurs bras parallèles fixes (136)
sont fixés de manière fixe au boîtier de dispositif (125) au moyen d'un adhésif électriquement isolant, ou
sont fixés de manière fixe au boîtier de dispositif (125) au moyen d'un adhésif sur une couche intermédiaire électriquement isolante.

10. Système de mesure directe selon l'une des revendications 1 à 9,
dans lequel le dispositif de compensation de force (120) présente un boîtier de dispositif (125), et
dans lequel à la fois un bras parallèle fixe (136) et un bras parallèle mobile (137) sont formés dans les éléments de guidage parallèle (131, 132) à travers des ouvertures appropriées (135), qui sont reliées par au moins une liaison parallèle (138), **caractérisé en ce que**
les éléments de guidage parallèle (131, 132) sont soudés solidement à leurs bras parallèles fixes (136) sur une carte de circuit imprimé (161, 162) et en font partie, et que
les cartes de circuits imprimés (161, 162) sont à leur tour fixées au boîtier de dispositif (125) au moyen de vis (129) ou au moyen de colle.

11. Système de mesure directe selon la revendication 10, **caractérisé en ce que** les cartes de circuit imprimé (161, 162) reliées par une bande conductrice flexible (163) sont réalisées sous la forme d'un module de carte de circuit imprimé monobloc (160).

12. Système de mesure directe selon l'une des revendications précédentes,
avec un codeur de position (170) **caractérisé en ce que**
le codeur de position (170) dans l'état de préparation pour le fonctionnement est disposé soit au-dessus de l'élément de guidage parallèle supérieur (131) soit en dessous de l'élément de guidage parallèle inférieur (132).
